(19) Europäisches Patentamt
European Patent Office
Office européen des brevets

(11) EP 0 617 102 B1

(12) **EUROPÄISCHE PATENTSCHRIFT**

(45) Veröffentlichungstag und Bekanntmachung des Hinweises auf die Patenterteilung:
**22.10.1997 Patentblatt 1997/43**

(51) Int Cl.[6]: **C09J 129/10**

(21) Anmeldenummer: **94103760.8**

(22) Anmeldetag: **11.03.1994**

(54) **Klebstoffe auf Basis von Polyvinylethercopolymerisaten**

Adhesives based on polyvinylether copolymers

Adhésifs à base de copolymères de polyvinyléther

(84) Benannte Vertragsstaaten:
**BE DE ES FR GB IT NL SE**

(30) Priorität: **20.03.1993 DE 4309081**

(43) Veröffentlichungstag der Anmeldung:
**28.09.1994 Patentblatt 1994/39**

(73) Patentinhaber: **BASF Aktiengesellschaft**
**67063 Ludwigshafen (DE)**

(72) Erfinder:
- **Kroener, Hubertus, Dr.**
  **D-67069 Ludwigshafen (DE)**
- **Schupp, Eberhard, Dr.**
  **D-67269 Gruenstadt (DE)**
- **Wistuba,Eckehardt, Dr.**
  **D-67098 Bad Duerkheim (DE)**
- **Aydin, Oral, Dr.**
  **D-68165 Mannheim (DE)**
- **Schwarzenbach, Elmar, Dr.**
  **D-67354 Roemerberg (DE)**
- **Schnell, Klaus**
  **D-67069 Ludwigshafen (DE)**

(56) Entgegenhaltungen:
**DE-C- 657 534**
**DE-C- 705 394**
**FR-A- 814 643**
**NL-A- 264 910**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 617 102 B1

Printed by Jouve, 75001 PARIS (FR)

## Beschreibung

Die Erfindung betrifft Klebstoffe, enthaltend Polyvinylethercopolymerisate mit einem gewichtsmittleren Molekulargewicht > 10 000, aufgebaut aus

a) 0 bis 95 Gew.-% Vinylethern der Formel I

$$H_2C{=}CH{-}O{-}R$$

b) 5 bis 100 Gew.-% hydrophilen Vinylethern der Formel II

$$H_2C{=}CH{-}O{-}R^1$$

und

c) 0 bis 30 Gew.-% weiteren Monomeren, wobei
R für eine $C_1$-$C_{20}$-Alkylgruppe steht und $R^1$ für einen aliphatischen oder cycloaliphatischen Rest steht, der durch Hydroxylgruppen substituiert sein kann und/oder durch nicht benachbarte Gruppen -Y-unterbrochen sein kann, Y die Bedeutung eines Sauerstoffatoms, eines Schwefelatoms, einer Gruppe $NR^2$ oder $N^+R^2R^3X^-$ hat, worin $R^2$ und $R^3$ unabhängig voneinander für ein Wasserstoffatom oder eine $C_1$-$C_4$-Alkylgruppe stehen sowie $X^-$ für ein Gegenanion steht und das molare Verhältnis von Kohlenstoffatomen zur Summe aus Gruppen Y und Hydroxylgruppen in dem aliphatischen oder cycloaliphatischen Rest $R^1$ von 1,01:1 bis 6,5:1 beträgt.

Weiterhin betrifft die Erfindung die Verwendung der Polyvinylethercopolymerisate als Klebstoffe und in Klebstoffen.

Die Verwendung von Polyvinylethern als Klebstoffe ist aus D. Sators, Handbook of Pressure Sensitive Adhesive Technology, 2. Aufl. 1989, Seite 494 bis 507 bekannt. In der DE-A-39 01 608 sind Polyvinylethercopolymerisate, welche hydrophile Vinylether enthalten, beschrieben. Diese Polyvinylethercopolymerisate werden in Mengen von 0,0001 bis 3 Gew.-% in Beschichtungs- oder Formmassen zur Verbesserung des Verlaufs und Verminderung von Schaumbildung eingesetzt. Das gewichtsmittlere Molekulargewicht $M_w$ der Polyvinylethercopolymerisate liegt vorzugsweise zwischen 1500 und 5000.

An Klebstoffe wird insbesondere die Anforderung einer guten Adhäsion zu den zu verklebenden Substraten und einer guten Kohäsion, d.h. einer hohen Scherfestigkeit der Klebstoffschicht gestellt.

Bei Naßverklebungen von wäßrigen Klebstoffen ist in besonderem Maße gewünscht, daß der Klebstoff schon im nassen Zustand eine gute Adhäsion zu den zu verklebenden Substraten aufweist und diese Substrate trotz des noch feuchten Klebefilms ausreichend fixiert sind. Als Beispiel sei die Naßverklebung von Etiketten auf Getränkeflaschen genannt.

Insbesondere die Adhäsion zu den Substraten ist bei bisher bekannten wäßrigen Klebstoffen noch verbesserungswürdig.

Aufgabe der vorliegenden Erfindung war es daher, die anwendungstechnischen Eigenschaften und Verarbeitungseigenschaften bisheriger Klebstoffe insbesondere auch bei Naßverklebungen zu verbessern.

Demgemäß wurden Klebstoffe gefunden, welche die oben definierten Polyvinylethercopolymerisate enthalten. Ebenso wurde die Verwendung der Polyvinylethercopolymerisate als Klebstoff gefunden.

Das gewichtsmittlere Molekulargewicht $\overline{M}_w$ der Polyvinylethercopolymerisate ist größer als 10.000, insbesondere größer 30.000.

Im allgemeinen werden bei der Polymerisation der Polyvinylethercopolymerisate keine mittleren Molekulargewichte oberhalb 250.000, insbesondere größer 150.000 eingestellt, jedoch können auch solche Copolymerisate mit höherem Molekulargewicht für Klebstoffe geeignet sein. Das Molekulargewicht $\overline{M}_w$ wird bestimmt durch Gelpermeationschromatographie mit einem Polystyrolstandard und Tetrahydrofuran als Eluationsmittel.

Die Polyvinylethercopolymerisate enthalten 0 bis 95 Gew.-%, vorzugsweise 60 bis 95 Gew.-% und besonders bevorzugt 70 bis 95 Gew.-% der Vinylether a). In Formel I steht R bevorzugt für eine $C_1$-$C_{12}$-Alkylgruppe.

Als Vinylether a) zu nennen sind z.B. Methylvinylether, Ethylvinylether, Propylvinylether, Isopropylvinylether, n-Butylvinylether, iso-Butylvinylether und Dodecylvinylether.

Die hydrophilen Vinylether b) sind in den Polyvinylethercopolymerisaten zu 5 bis 100, vorzugsweise 5 bis 40 und besonders bevorzugt 5 bis 30 Gew.-% enthalten.

Die hydrophilen Vinylether enthalten nach Formel II einen aliphatischen oder cycloaliphatischen Rest $R^1$, der durch Hydroxylgruppen substituiert sein kann und/oder durch nicht benachbarte Gruppen -Y- unterbrochen sein kann; Bedingung ist, daß das molare Verhältnis von Kohlenstoffatomen zur Summe aus Gruppen Y und Hydroxylgruppen in $R^1$ 1,01:1 bis 6,5:1, vorzugsweise von 1,05:1 bis 4,5:1 beträgt.

Y kann für ein Sauerstoffatom (Ethergruppe), für ein Schwefelatom (Thioethergruppe) für $NR^2$ (sekundäre oder tertiäre Aminogruppe) oder $N^+R^2R^3X^-$ (Ammoniumgruppe) stehen.

$R^2$ und $R^3$ stehen unabhängig voneinander für ein Wasserstoffatom oder eine $C_1$-$C_4$-Alkylgruppe, insbesondere stehen $R^2$ und $R^3$ für ein Wasserstoffatom. $X^-$ steht für ein Gegenanion, z.B. ein Halogenid-, insbesondere Chloridanion.

Als hydrophile Vinylether seien z.B. solche mit Polyalkylenimingruppen der Formel

$$H_2C{=}CH{-}O({-}Z{-}NR^2)_e{-}W \qquad IV$$

genannt, in denen Z und W jeweils für eine $C_1$-$C_6$-Alkylengruppe bzw. $C_1$-$C_6$-Alkylgruppe stehen, W zusätzlich die Bedeutung eines Wasserstoffatoms haben kann und e eine Zahl von 1 bis 30 ist.

Bevorzugte hydrophile Vinylether sind solche mit Ethergruppen in $R^1$.

Insbesondere zu nennen sind Vinylether der Formel

$$H_2C{=}CH{-}O({-}Z{-}O)_n({-}V{-}O)_m{-}W \qquad III,$$

in der Z, V, W unabhängig voneinander für eine $C_1$-$C_6$-Alkylengruppe, bzw. $C_1$-$C_6$-Alkylgruppe stehen, wobei W zusätzlich die Bedeutung eines Wasserstoffatoms haben kann und n und m jeweils für eine ganze Zahl von 0 bis 40 stehen und mindestens eine der Variablen n und m ungleich 0 ist und die Summe aus n und m maximal 40 ist.

Ganz besonders bevorzugt ist n=0 und m hat Werte von 1 bis 10, insbesondere 2 bis 6.

V steht ganz besonders bevorzugt für eine $C_1$-$C_3$-Alkylengruppe und W für eine $C_1$-$C_3$-Alkylgruppe.

Zu nennen sind beispielsweise der Diethylenglycolvinylmethylether, Triethylenglycolvinylmethylether, Tetraethylenglycolvinylmethylether, Vinylether auf Propylenoxidbasis mit n=0, m=2 bis 10,

V= 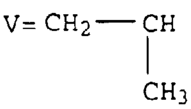

und $W{=}CH_3$, Vinylether auf Polytetrahydrofuranbasis mit n=0, m=2 bis 10, $V{=}CH_2{-}CH_2{-}CH_2$ und $W{=}CH_3$, Vinylether auf Oxymethylenbasis mit n=0, m=5 bis 30 und $V{=}CH_2$ und $W{=}CH_3$.

Ebenso kommen hydrophile Vinylether in Betracht, die keine Gruppen Y, sondern lediglich Hydroxylgruppen enthalten. Erwähnenswert sind insbesondere $C_1$-$C_6$-Hydroxyalkylvinylether, wie Hydroxyethylvinylether, Hydroxypropylvinylether und Hydroxybutylvinylether.

Die Vinylether können in bekannter Weise durch Acetylierung von entsprechenden Alkoholen oder Polyalkoholen erhalten werden, wie es in gängigen Lehrbüchern der organischen Chemie, z.B. im Organikum, Berlin 1976, 15. Auflage auf Seiten 338 bis 339 oder im Houben-Weyl "Methoden der organischen Chemie", 4. Aufl., Bd. VI/1d, S. 136 - 158 beschrieben ist.

Bei der Acetylierung von Polyalkoholen werden die molaren Anteile an Acetylen und Polyalkohol so gewählt, daß im erhaltenen Vinylether die gewünschte Anzahl von freien Hydroxylgruppen verbleibt.

Als Alkohole bzw. Polyalkohole genannt seien z.B. Alkanole oder -diole und Alkoxypolyoxyalkylenglycole.

Zur Herstellung von Alkoxypolyoxyalkylenglycolen kann man z.B. ausgehen von Alkandiolen und diese mit der gewünschten Menge an Alkylenoxiden (poly)alkoxylieren. Aus der erhaltenen Verbindung kann dann durch Umsetzung von Acetylen mit der verbleibenden Hydroxylgruppe der Vinylether hergestellt werden.

Die Vinylether können auch stufenweise hergestellt werden, z.B. indem zunächst ein 1 mol Diol mit 1 mol Acetylen umgesetzt wird und die verbleibende Hydroxylgruppe anschließend oder gegebenenfalls auch erst nach der Copolymerisation der Monomeren a) bis c) alkoxyliert bzw. polyalkoxyliert wird. Noch vorhandene, z.B. endständige Hydroxylgruppen können, falls gewünscht, leicht mit Alkylgruppen nach bekannten Methoden verethert werden.

Die weiteren Monomeren c) können in Mengen von 0 bis 30, vorzugsweise 0 bis 20, besonders bevorzugt 0 bis 5 Gew.-% in dem Copolymerisat enthalten sein.

Als Monomere c) beispielsweise zu nennen sind Vinylether mit mehr als einer Vinylethergruppe oder andere Monomere als b) mit reaktiven Gruppen z.B. Hydroxylgruppen, insbesondere auch N-Methylolgruppen, Carbonylgruppen oder Carboxylgruppen.

Durch den Einbau dieser Monomeren können die Polyvinylethercopolymerisate während oder nach der Polymerisation vernetzt oder kettenverlängert werden.

Die Herstellung der Polyvinylethercopolymerisate kann z.B. durch Polymerisation in Lösung, Substanz oder Emulsion erfolgen. Geeignet ist die kationische oder radikalische Polymerisation. Insbesondere bei Gegenwart von Vinylethern b), welche Hydroxylgruppen tragen oder Monomeren c), welche sich kationisch nicht leicht polymerisieren lassen, ist die radikalische Polymerisation bevorzugt. Hierbei werden die Monomeren geeigneterweise bei Temperaturen von 30 bis 150°C in Gegenwart eines Radikalstarters in Lösung oder Substanz polymerisiert.

In der Regel werden die Vinylether jedoch kationisch, insbesondere in Substanz, polymerisiert. Als Initiatoren für die kationische Polymerisation sind z.B. Lewissäuren wie Bortrifluorid-Dihydrat, Zinndichlorid oder Aluminiumtrichlorid geeignet. Die Wirkung der Initiatoren kann gegebenenfalls durch geeignete Katalysatoren, z.B. Oxalsäure gesteigert werden. Die Polymerisationstemperatur beträgt vorzugsweise 0 bis 100°C.

Die Polymerisation kann als Batch oder im Zulaufverfahren erfolgen. Da jedoch die Vinylether in der Regel sehr reaktive Monomere sind, ist das Zulaufverfahren bevorzugt.

Die Polyvinylethercopolymerisate eignen sich insbesondere in Form ihrer wäßrigen Lösung oder Dispersion als Klebstoffe. Sie sind selbstdispergierbar und zeigen gute klebetechnische Eigenschaften z.B. eine gute Adhäsion und Kohäsion. Insbesondere ist bei den Polyvinylethercopolymerisaten kaum Durchschlagen bei der Beschichtung von Papier, z.B. von Etiketten, zu beobachten.

Unter Durchschlagen versteht man eine Verfärbung oder sonstige optische Beeinträchtigung der nicht beschichteten Seite eines Papiers durch eine Beschichtung auf der Rückseite.

Die Polyvinylethercopolymerisate eignen sich insbesondere für die Naßverklebung, insbesondere auch von Etiketten, da sie schon im nassen Zustand, d.h. im Gemisch mit Wasser eine gute Adhäsion und Kohäsion bewirken.

Die Polyvinylethercopolymerisate können als einzige Polymerbasis für Klebstoffe dienen. Sie können aber auch im Gemisch mit anderen Polymeren, insbesondere auch in wäßriger Dispersion oder Lösung vorliegenden Polymeren, z.B. Styrol-Butadien Copolymerisaten oder Polyacrylaten, sowie Stärke bzw. Stärkeleim oder Kaseinleim verwendet werden.

Die erfindungsgemäßen Klebstoffe enthalten im allgemeinen mehr als 5 Gew.-%, insbesondere mehr als 20 Gew.-% der Polyvinylethercopolymerisate, bezogen auf den Feststoffgehalt der Klebstoffe. Im Gemisch mit anderen Polymeren kann der Anteil der Polyvinylethercopolymerisate z.B. 5 bis 90, insbesondere 20 bis 70 Gew.-%, bezogen auf die Polymermischung betragen.

Mischungen der Polyvinylethercopolymerisate mit den oben genannten Polymeren, insbesondere mit Stärkeleimen zeigen sehr gute klebetechnische Eigenschaften, z.B. eine gute Adhäsion und Kohäsion.

Den Klebstoffen können weiterhin noch Zusatzstoffe wie Verdicker, Verlaufsmittel, Entschäumer, Weichmacher und klebrigmachende Harze insbesondere mit einem Molgewicht unter 5000, z.B. Kolophoniumharze zugesetzt werden.

## Beispiele

### Beispiel 1

In einem Reaktionsgefäß mit Heizbad, Rührer, Trockeneiskühler und Zulaufgefäßen wurden 300 g einer Mischung aus 1275 g Vinylmethylether und 225 g Triethylenglycolvinylmethylether vorgelegt und das Reaktionsgefäß mit 30°C Außentemperatur beheizt.

Innerhalb von 15 min wurden in 3 Portionen 0,62 ml einer 3 %igen Lösung von Bortrifluoriddihydrat in Dioxan zugegeben. Nach dem Anspringen der Reaktion wurden innerhalb von 5 Stunden die restlichen 1200 g der Monomermischung und 0,92 ml einer 3 %igen Lösung von Bortrifluoriddihydrat in Dioxan und 1,25 ml einer 1 %igen Lösung von Oxalsäure in Dioxan kontinuierlich zugegeben.

Nach Ende der Zuläufe wurde die Reaktionsmischung auf 70°C aufgeheizt und 30 min nachpolymerisiert. Anschließend wurde 1 Stunde Vakuum angelegt (20 mbar) und nicht umgesetztes Monomer abgezogen. Man erhielt 1450 g Produkt.

Das gewichtsmittlere Molekulargewicht $\overline{M}_w$ betrug 70.000 (bestimmt durch Gelpermeationschromatographie mit Tetrahydrofuran als Eluationsmittel und Polystyrol als Standard).

Eine 50 gew.-%ige wäßrige Lösung des Polymeren wurde in einer Schichtstärke von 60 µm auf Etikettenpapier aufgetragen, getrocknet und der getrocknete Film mit Silikonpapier abgedeckt. Ein beschichtetes Etikettenpapier wurde bei Raumtemperatur und ein anderes bei 50°C im Trockenschrank gelagert. Nach 7 Tagen Lagerung bei Raumtemperatur und 12 Stunden Lagerung bei 50°C war noch kein Durchschlagen, d.h. eine Verfärbung oder Verfettung der zur beschichteten Seite entgegengesetzten Seite des Etikettenpapiers, erkennbar.

Vergleichsbeispiel 1

In einem Reaktionsgefäß mit Heizbad, Rührer, Trockeneiskühler und Zulaufgefäßen wurden 75 g einer Mischung aus 320 g Vinylmethylether und 75 g Triethylenglycolvinylmethylether vorgelegt und das Reaktionsgefäß mit 30°C Außentemperatur beheizt.

Innerhalb von 15 min wurden in 3 Portionen 1,55 ml einer 3 %igen Lösung von Bortrifluoriddihydrat in Dioxan zugegeben. Nach dem Anspringen der Reaktion wurden innerhalb von 5 Stunden die restlichen 320 g der Monomermischung und 2,50 ml einer 3 %igen Lösung von Bortrifluoriddihydrat in Dioxan und 3,12 ml einer 1 %igen Lösung von Oxalsäure in Dioxan kontinuierlich zugegeben.

Nach Ende der Zuläufe wurde die Reaktionsmischung auf 70°C aufgeheizt und 30 min nachpolymerisiert. Anschließend wurde 1 Stunde Vakuum angelegt (20 mbar) und nicht umgesetztes Monomer abgezogen. Man erhält ca. 380 g Produkt ($\overline{M}_w$ 9500).

Mit einer 50 gew.-%igen wäßrigen Lösung des Polymeren wurde Etikettenpapier, wie oben beschrieben, beschichtet.

Der Klebstoffilm hatte jedoch keine ausreichende Kohäsion. Beschichtete Etiketten konnten ohne nennenswerten Widerstand von Substraten wie Glas oder Kunststoffen, z.B. Polyethylenterephthalat, wieder abgezogen werden. Ein Durchschlagen wurde schon erkennbar nach Lagerung von einem Tag bei Raumtemperatur und einer Stunde bei 50°C.

Beispiel 2

In einem Reaktionsgefäß mit Heizbad, Rührer, Trockeneiskühler und Zulaufgefäßen wurden 80 g einer Mischung aus 320 g Vinylmethylether, 20 g Isobutylvinylether und 60 g Triethylenglycolvinylmethylether vorgelegt und das Reaktionsgefäß mit 30°C Außentemperatur beheizt.

Innerhalb von 15 min wurden in 3 Portionen 0,55 ml einer 3 %igen Lösung von Bortrifluoriddihydrat in Dioxan zugegeben. Nach dem Anspringen der Reaktion wurden innerhalb von 5 Stunden die restlichen 340 g der Monomermischung und 0,48 ml einer 3 %igen Lösung von Bortrifluoriddihydrat in Dioxan und 0,35 ml einer 1 %igen Lösung von Oxalsäure in Dioxan kontinuierlich zugegeben.

Nach Ende der Zuläufe wurde die Reaktionsmischung auf 70°C aufgeheizt und 30 min nachpolymerisiert. Man erhielt ca. 400 g Produkt.

$\overline{M}_w$: 26.000.

Bei Verkneten des Produkts mit Wasser wurde eine Dispersion erhalten (50 Gew.-% Feststoff). Die Dispersion wurde wie oben beschrieben auf Etikettenpapier aufgetragen.

Ein Durchschlagen war auch nach 7 Tagen Lagerung bei Raumtemperatur und 12 Stunden Lagerung bei 50°C nicht erkennbar.

Beispiel 3

In einem Reaktionsgefäß mit Heizbad, Rührer, Trockeneiskühler und Zulaufgefäßen wurden 80 g einer Mischung aus 320 g Vinylmethylether, 20 g Vinyloxybutylacrylat und 80 g Triethylenglycolvinylmethylether vorgelegt und das Reaktionsgefäß mit 30°C Außentemperatur beheizt.

Innerhalb von 15 min wurden in 3 Portionen 1,65 ml einer 3 %igen Lösung von Bortrifluoriddihydrat in Dioxan zugegeben. Nach dem Anspringen der Reaktion wurden innerhalb von 5 Stunden die restlichen 340 g der Monomermischung und 1,65 ml einer 1 %igen Lösung von Bortrifluoriddihydrat in Dioxan und 0,42 ml einer 1 %igen Lösung von Oxalsäure in Dioxan kontinuierlich zugegeben.

Nach Ende der Zuläufe wurde die Reaktionsmischung auf 70°C aufgeheizt und 30 min nachpolymerisiert. Man erhielt ca. 410 g Produkt.

$\overline{M}_w$: 29.000.

Bei Verkneten des Polymeren mit Wasser wurde eine Dispersion erhalten (50 Gew.-% Feststoff). Die Dispersion wurde auf Etikettenpapier mit einer Schichtdicke von 60 µm aufgetragen und getrocknet. Der getrocknete Polymerfilm wurde anschließend 10 min mit einer UV-Lampe belichtet und dann mit Silikonpapier abgedeckt. Es war kein Durchschlagen nach 48 h Lagerung bei 50°C festzustellen.

Beispiel 4

In einem Reaktionsgefäß mit Heizbad, Rührer, Trockeneiskühler und Zulaufgefäßen wurden 400 g einer Mischung aus 1400 g Vinylethylether und 600 g Triethylenglycolvinylmethylether vorgelegt und das Reaktionsgefäß mit 50°C Außentemperatur beheizt.

Innerhalb von 10 min wurden in 2 Portionen 0,75 ml einer 3 %igen Lösung von Bortrifluoriddihydrat in Dioxan

zugegeben. Nach dem Anspringen der Reaktion wurden innerhalb von 4 Stunden die restlichen 1600 g der Monomermischung und 2,33 ml einer 3 %igen Lösung von Bortrifluoriddihydrat in Dioxan kontinuierlich zugegeben.

Nach Ende der Zuläufe wurde die Reaktionsmischung auf 70°C aufgeheizt und 2 Stunden nachpolymerisiert. Man erhielt 1950 g Produkt.

$\overline{M}_w$: 28.000.

Für die Prüfung des Durchschlagens und zur Überprüfung der Verträglichkeit mit Stärkeleim wurden ca. 200 g des Produktes mit 200 g Wasser versetzt und mit einem Ultraturrax-Rührer der Fa. IKA 2 min. bei 4000 upm intensiv gemischt. Man erhielt eine stabile Emulsion des Polymeren in Wasser. Diese Dispersion wurde in einer Schichtstärke von ca. 60 µm wie beschrieben auf Etikettenpapier aufgetragen; getrocknet und bei Raumtemperatur gelagert. Ein Durchschlagen konnte nach 7 Tagen Lagerung bei Raumtemperatur nicht beobachtet werden.

Beispiel 5

In einem Reaktionsgefäß mit Heizbad, Rührer, Trockeneiskühler und Zulaufgefäßen wurden 400 g einer Mischung aus 1400 g Isobutylvinylether und 600 g Triethylenglycolvinylmethylether vorgelegt und das Reaktionsgefäß mit 50°C Außentemperatur beheizt.

Innerhalb von 10 min wurden in 2 Portionen 0,75 ml einer 3 %igen Lösung von Bortrifluoriddihydrat in Dioxan zugegeben. Nach dem Anspringen der Reaktion wurden innerhalb von 4 Stunden die restlichen 1600 g der Monomermischung und 2,25 ml einer 3 %igen Lösung von Bortrifluoriddihydrat in Dioxan sowie 1,0 ml einer 1 %igen Lösung von Oxalsäure in Dioxan kontinuierlich zugegeben.

Nach Ende der Zuläufe wurde die Reaktionsmischung auf 70°C aufgeheizt und 2 Stunden nachpolymerisiert. Man erhielt ca. 1990 g Produkt.

$\overline{M}_w$: 25.000.

Für die Prüfung des Durchschlagens und zur Überprüfung der Verträglichkeit mit Stärkeleim wurden ca. 200 g des Produktes mit 200 g Wasser versetzt und mit einem Ultraturrax-Rührer der Fa. IKA 2 min. bei 4000 upm intensiv gemischt. Man erhielt eine stabile Emulsion des Polymeren in Wasser. Diese Dispersion wurde in einer Schichtstärke von ca. 60 µm wie beschrieben auf Etikettenpapier aufgetragen; getrocknet und bei Raumtemperatur gelagert. Ein Durchschlagen konnte nach 7 Tagen Lagerung bei Raumtemperatur nicht beobachtet werden.

Verträglichkeit mit Stärkeleim

In einem Becher wurde eine 50 gew.-%ige wäßrige Lösung der Polyvinylethercopolymerisate aus den Beispielen 1 bis 5 jeweils mit einem Stärkeleim der Fa. Türmerleim (Typ 740 HN) im Gewichtsverhältnis 1:1 gemischt und solange gerührt bis eine homogene Masse entstanden war. Zum Vergleich wurde der Stärkeleim auch mit einem Polyvinylmethyletherhomopolymerisat (PVH) ($\overline{M}_w$: 70.000) entsprechend gemischt.

Nach 24 Stunden Lagerung bei Raumtemperatur oder bei 40°C (Tabelle) wurde festgestellt, ob die Mischungen verträglich waren oder eine Phasenseparation bzw. Koagulation stattgefunden hat.

Tabelle:

| Verträglichkeit mit Stärkeleim | | |
|---|---|---|
| Raumtemperatur | Beispiel 1 | + |
| 40°C*) | Beispiel 1 | + |
| 40°C | Beispiel 2 | + |
| 40°C | Beispiel 3 | + |
| 40°C | Beispiel 4 | + |
| 40°C | Beispiel 5 | + |
| Raumtemperatur | PVH | - |
| 40°C | PVH | - |
| +: die Mischung blieb homogen<br>-: teilweise oder vollständige Entmischung | | |

*) bei Prüfungen bei 40°C wurden 3 Gew.-% Aerosil® als Verdicker zugesetzt

## Patentansprüche

**1.** Klebstoffe, enthaltend Polyvinylethercopolymerisate mit einem gewichtsmittleren Molekulargewicht > 10 000, aufgebaut aus

a) 0 bis 95 Gew.-% Vinylethern der Formel I

$$H_2C{=}CH{-}O{-}R$$

b) 5 bis 100 Gew.-% hydrophilen Vinylethern der Formel II

$$H_2C{=}CH{-}O{-}R^1$$

und

c) 0 bis 30 Gew.-% weiteren Monomeren, wobei
R für eine $C_1$-$C_{20}$-Alkylgruppe steht und $R^1$ für einen aliphatischen oder cycloaliphatischen Rest steht, der durch Hydroxylgruppen substituiert sein kann und/oder durch nicht benachbarte Gruppen -Y- unterbrochen sein kann, Y die Bedeutung eines Sauerstoffatoms, eines Schwefelatoms, einer Gruppe $NR^2$ oder $N^+R^2R^3X^-$ hat, worin $R^2$ und $R^3$ unabhängig voneinander für ein Wasserstoffatom oder eine $C_1$-$C_4$-Alkylgruppe stehen sowie $X^-$ für ein Gegenanion steht und das molare Verhältnis von Kohlenstoffatomen zur Summe aus Gruppen Y und Hydroxylgruppen in dem aliphatischen oder cycloaliphatischen Rest $R^1$ 1,01:1 bis 6,5:1 beträgt.

**2.** Klebstoffe nach Anspruch 1, enthaltend Polyvinylethercopolymerisate aufgebaut aus

60 bis 95 Gew.-% der Vinylether a),
5 bis 40 Gew.-% der hydrophilen Vinylether b) und
0 bis 20 Gew.-% weiteren Monomeren.

**3.** Klebstoffe nach Anspruch 1 oder 2, wobei Y für ein Sauerstoffatom steht.

**4.** Klebstoffe nach einem der Ansprüche 1 bis 3, wobei als hydrophile Vinylether b) solche der Formel

$$H_2C{=}CH{-}O({-}Z{-}O)_n({-}V{-}O)_m{-}W \qquad III,$$

eingesetzt werden, in der Z, V und W unabhängig voneinander für eine $C_1$-$C_6$-Alkylengruppe bzw. $C_1$-$C_6$-Alkylgruppe stehen, W zusätzlich die Bedeutung eines Wasserstoffatoms haben kann und n und m jeweils für eine Zahl von 0 bis 40 stehen, mit der Maßgabe, daß die Summe aus n und m maximal 40 ist und eine der Variablen n und m ungleich 0 ist.

**5.** Verwendung von Polyvinylethercopolymerisaten gemäß einem der Ansprüche 1 bis 3 als Klebstoffe.

**6.** Verwendung von Polyvinylethercopolymerisaten gemäß einem der Ansprüche 1 bis 3 in wäßrigen Klebstoffen zur Verbesserung der Adhäsion bei der Naßverklebung.

## Claims

**1.** An adhesive containing a polyvinyl ether copolymer having a weight average molecular weight of > 10,000, comprising

a) from 0 to 95% by weight of vinyl ethers of the formula I

$$H_2C=CH-O-R$$

b) from 5 to 100% by weight of hydrophilic vinyl ethers of the formula II

$$H_2C=CH-O-R^1$$

and
c) from 0 to 30% by weight of further monomers,
where R is $C_1$-$C_{20}$-alkyl and $R^1$ is an aliphatic or cycloaliphatic radical which may be substituted by hydroxyl groups or interrupted by nonadjacent groups -Y-, Y is oxygen, sulfur or a group $NR^2$ or $N^+R^2R^3X^-$, $R^2$ and $R^3$ independently of one another are each hydrogen or $C_1$-$C_4$-alkyl and $X^-$ is a counter-anion, and the molar ratio of carbon atoms to the sum of groups Y and hydroxyl groups in the aliphatic or cycloaliphatic radical $R^1$ is from 1.01 : 1 to 6.5 : 1.

**2.** An adhesive as claimed in claim 1, containing a polyvinyl ether copolymer comprising

from 60 to 95% by weight of the vinyl ethers a),
from 5 to 40% by weight of the hydrophilic vinyl ethers b) and
from 0 to 20% by weight of further monomers.

**3.** An adhesive as claimed in claim 1 or 2, wherein Y is oxygen.

**4.** An adhesive as claimed in any of claims 1 to 3, wherein the hydrophilic vinyl ethers b) used are those of the formula

$$H_2C=CH-O(-Z-O)_n(-V-O)_m-W \qquad III$$

where Z, V and W independently of one another are each $C_1$-$C_6$-alkylene or $C_1$-$C_6$-alkyl, W may additionally be hydrogen and n and m are each from 0 to 40, with the proviso that the sum of n and m is not more than 40 and one of the variables n and m is not 0.

**5.** Use of a polyvinyl ether copolymer as claimed in any of claims 1 to 3 as an adhesive.

**6.** Use of a polyvinyl ether copolymer as claimed in any of claims 1 to 3 in an aqueous adhesive for improving the adhesion in the case of wet adhesive bonding.

## Revendications

**1.** Adhésifs contenant des copolymères de polyvinyléther ayant une masse moléculaire moyenne en poids > 10 000 formés à partir de

a) 0 à 95 % en poids d'éthers vinyliques de formule I

$$H_2C=CH-O-R$$

b) 5 à 100 % en poids d'éthers vinyliques hydrophiles de formule II

$$H_2C=CH-O-R^1$$

et
c) 0 à 30 % en poids d'autres monomères,
où R est mis pour un groupement alkyle en $C_1$-$C_{20}$ et $R^1$ est mis pour un reste aliphatique ou cycloaliphatique,

qui peut être substitué par des groupements hydroxyl ou qui peut être interrompu par des groupements -Y- non voisins, Y étant mis pour un atome d'oxygène, un atome de soufre, un groupement $NR^2$ ou $N^+R^2R^3X^-$, où $R^2$ et $R^3$ sont mis indépendamment l'un de l'autre pour un atome d'hydrogène ou un groupement alkyle en $C_1$-$C_4$ alors que $X^-$ représente un contre-anion, le rapport molaire des atomes de carbone à la somme des groupements Y et des groupements hydroxyl dans le reste aliphatique ou cycloaliphatique $R^1$ s'élève à 1,01: 1 à 6,5:1.

**2.** Adhésifs selon la revendication 1 contenant des copolymères de polyvinyléther formés à partir de

60 - 95 % en poids d'éther vinylique a),
5 - 40 % en poids d'éther vinylique hydrophile b) et
0 - 20 % en poids d'autres monomères.

**3.** Adhésifs selon la revendication 1 ou 2, où Y est mis pour un atome d'oxygène.

**4.** Adhésifs selon l'une quelconque des revendications 1 à 3, où l'on utilise en tant qu'éther vinylique hydrophile b) des composés de formule

$$H_2C{=}CH\text{-}O(\text{-}Z\text{-}O)_n(\text{-}V\text{-}O)_m\text{-}W \qquad \text{III},$$

dans laquelle Z, V et W sont mis indépendamment les uns des autres pour un groupement alkylène en $C_1$-$C_6$ ou un groupement alkyle en $C_1$-$C_6$, W pouvant en outre représenter un atome d'hydrogène et n et m étant chacun mis pour un nombre de 0 à 40, étant spécifié que la somme de n et de m vaut 40 au maximum et que l'une des variables n et m ne vaut pas 0.

**5.** Utilisation de copolymères de polyvinyléther selon l'une des revendications 1 à 3 en tant qu'adhésifs.

**6.** Utilisation de copolymères de polyvinyléther selon l'une des revendications 1 à 3 dans des adhésifs aqueux pour améliorer l'adhésion lors du collage humide.